(19) **Europäisches Patentamt**
**European Patent Office**
**Office européen des brevets**

(11) **EP 1 448 484 B1**

(12) **EUROPEAN PATENT SPECIFICATION**

(45) Date of publication and mention
of the grant of the patent:
**13.06.2012 Bulletin 2012/24**

(51) Int Cl.:
*C02F 5/10* (2006.01)    *C11D 17/00* (2006.01)
*C11D 3/20* (2006.01)

(21) Application number: **02803873.5**

(22) Date of filing: **27.11.2002**

(86) International application number:
**PCT/GB2002/005342**

(87) International publication number:
**WO 2003/045855 (05.06.2003 Gazette 2003/23)**

(54) **CLEANING METHOD**

REINIGUNGSVERFAHREN

PROCEDE DE NETTOYAGE

(84) Designated Contracting States:
**AT BE BG CH CY CZ DE DK EE ES FI FR GB GR IE IT LI LU MC NL PT SE SK TR**

(30) Priority: **27.11.2001 GB 0128332**

(43) Date of publication of application:
**25.08.2004 Bulletin 2004/35**

(73) Proprietor: **Reckitt Benckiser N.V.**
**2132 WT Hoofddorp (NL)**

(72) Inventors:
• **Bosco, Manuela**
 **I-30034 Mira (IT)**
• **Casonati, Roberto**
 **I-30034 Mira (IT)**

(74) Representative: **Brown, Andrew Stephen**
 **Reckitt Benckiser plc**
 **Group Patents Department**
 **Dansom Lane**
 **Hull**
 **HU8 7DS (GB)**

(56) References cited:
 **WO-A-99/02640**

Remarks:
 The file contains technical information submitted after the application was filed and not included in this specification

Printed by Jouve, 75001 PARIS (FR)

**EP 1 448 484 B1**

**Description**

This invention relates to a method of softening water and/or in which the deposition of hard water scale is inhibited. The invention relates in particular to such a method carried out in a domestic environment. The invention also relates to compressed water-softening compositions for such methods in which 50% or more of the particles of citric acid or a salt thereof are greater than 200 microns and 10% or less of the particles of citric acid or a salt thereof are less than 200 microns.

It is well known that certain metal compounds, notably calcium compounds, when present in water, have a significant effect on the properties of the water. For example, "hard" water containing a significant loading of soluble calcium and magnesium compounds may require a large amount of soap or detergent in order to form a lather. Scale deposits can readily form from such water, for example on heating or pH change or evaporation. These can be encrustations, or watermarks left on evaporation of water droplets from, especially, a shiny surface.

There have been many proposals for removal of metal ions from aqueous solutions. In the industrial context proposals have included filter beds and polymeric filters for capturing heavy metal ions from an aqueous solution flowing within a passageway. Examples are given in EP992238A and GB20869564A. In the domestic context chelating compositions can be added to an aqueous washing solution and these can capture metal ions, such as calcium ions. Examples of chelating compositions are given in EP892040A.

WO 99/02640 describes cleaning compositions, including laundry, dishwashing, hard surface cleaner and oral/dental cleaning compositions, and comprising a) a surfactant system b) an oxidoreductase with an α/β-hydrolase fold and a catalytic triad consisting of the amino acid residues serine, histidine and aspartic acid, c) a hydrogen peroxide source, and d) an organic acid.

Citric acid or tri-sodium citrate dihydrate of activity 86.4% with a particle size distribution between 425 and 350 μm is a component of some examples of WO 99/02640.

Increasingly popular is the delivery of cleaning and water-softening compositions as compressed compositions, typically a tablet. These are convenient providing a unit dosage which is easily handled. Difficulties arise in the production of such compressed compositions in balancing the needs that the compressed composition is suitably hard and non-friable under transportation conditions but yet is not so compacted that it cannot easily disintegrate. Suitable levels of "hardness" are between 150 N and 250 N (the test conditions being set out in the Example section). Suitable levels of "friability" are between 2% and 9% (the test conditions being set out in the Example section). Suitable "disintegration" times are between 5 seconds and 180 seconds, when place in 1l of gently stirred water.

Multi-region compressed compositions are now of interest in being able to provide such advantages as differential release of actives, or delayed release of one region. Developing multi-region compressed compositions is time consuming and expensive due to ingredients reacting to the same physical conditions in different ways, such as moisture or temperature fluctuations. This is may lead to problems at the interface between the regions and the need to prevent separation, which can be caused, for example, by differential expansion. Therefore there is a need to balance the physical properties between the regions even where the composition in each region may be different. To aid ease of development the starting point is usually to start by keeping the compositions between the regions as similar as possible.

A particular problem found with producing such a multi-region product is that the water-softening ingredients are generally highly crystalline and are not easily produced into compressed formulations, such as the citrate and silicates.

We have found that for certain common actives in water-softening compositions the distribution of the granulometry of citric acid, or a salt thereof, is important in the manufacture of compressed compositions, in particular water-softening compositions which contain a high proportion of this ingredient. The selected particle size distribution improves binding properties. The resulting compressed composition is in fact more stable and maintains acceptable levels of friability and of disintegration for a longer time. Also the aesthetic of the compressed composition is better.

Therefore we present as a feature of the invention a water-softening tablet, being a compressed composition comprising particles of citric acid or a salt thereof, in which greater than 45% of said particles have a size of at least 425 microns. Preferably greater than 60% of said particles have a size of greater than 425 microns. Preferably at least 95% of said particles have a size of at least 200 microns. Preferably 10% or less of the particles of citric acid or a salt thereof have a particle size of less than 200 microns.

Additional water-softening actives may also be present as described below. A preferred active is a homo or co polymer of the following monomeric units or a salt thereof; an acrylic acid, a maleic acid, a sulfonic acid or a phosphonic acid.

We have also found that the distribution of citric acid, or its salt, between the regions of the tablet (where such regions are provided) affects the values discussed above. The weight excess of citric acid or its salt in at least one region is at least 5%, ideally greater than 7%, 10%, 12%, 20%, 50%, 75% or 95% greater than in a second region.

There are three main types of method of action for water softening actives, described below.

1) Ion exchange agents - such agents include alkali metal (Preferably sodium) aluminosilicates either crystalline, amorphous or a mixture of the two. Such aluminosilicates generally have a calcium ion exchange capacity of at least 50 mg CaO per gram of aluminosilicate, comply with a general formula:

$$0.8\text{-}1.5\ Na_2O.\ Al_2O_3.\ 0.8\text{-}6\ SiO_2$$

and incorporate some water. Preferred sodium aluminosilicates within the above formula contain $1.5\text{-}3.0\ SiO_2$ units. Both amorphous and crystalline aluminosilicates can be prepared by reaction between sodium silicate and sodium aluminate, as amply described in the literature.

Suitable crystalline sodium aluminosilicate ion-exchange detergency builders are described, for example, in GB 1429143 (Procter & Gamble). The preferred sodium aluminosilicates of this type are the well known commercially available zeolites A and X, and mixtures thereof. Also of interest is zeolite P described in EP 384070 (Unilever). Another class of compounds are the layered sodium silicate builders, such as are disclosed in US-A-4464839 and US-A-4820439 and also referred to in EP-A-551375.

These materials are defined in US-A-4820439 as being crystalline layered, sodium silicate of the general formula

$$NaMSi_xO_{2x+1}.\ YH_2O$$

where

M denotes sodium or hydrogen,

x is from 1.9 to 4 and y is from 0 to 20.

Quoted literature references describing the preparation of such materials include Glastechn. Ber. 37,194-200 (1964), Zeitschrift für Kristallogr. 129, 396-404 (1969), Bull. Soc. Franc. Min. Crist., 95, 371-382 (1972) and Amer. Mineral, 62, 763-771 (1977). These materials also function to remove calcium and magnesium ions from water, also covered are salts of zinc which have also been shown to be effective water softening agents.

2) Ion capture agents - agents which prevent metal ions from forming insoluble salts or reacting with surfactants, such as polyphosphate, monomeric polycarbonates, EDTA, algins, alginates.

3) Anti-nucleating agents - agents which prevent seed crystal growth, such as polycarbonate polymers, such as polyacrylates, acrylic/maleic copolymers, and acrylic phosphonates and sulfonates.

The water-softening tablets may be used in ware washing using a machine or a manual method. The water-softening tablets may also be used to soften water in other cleaning methods such as hard surfaces, for example using a hand-cloth or mop, and an open vessel, for example a bucket or bowl. Thus, the cleaning method could be a method of cleaning a hard surface, for example a window, a tiled surface, shower screen, dirty tableware and kitchenware, a sanitary article, for example a bath, shower screen, lavatory, wash basin or sink, a car or a kitchen worktop.

The invention will now be described, by way of embodiment, with reference to the following examples.

### Hardness Test

Using a dynamometer with a test piston diameter of 8 mm and a piston speed 30 mm per minute (a machine such as the ERWEKA tablet hardness tester THB 30 may be used) the maximum hardness of the tablet just prior to breakage is recorded for 4 tablets in the same orientation and averaged.

### Friability Test

Ten tablets are weighed and placed into a square plastic sample holder of approximate dimensions $110 \times 110$mm square by 170mm long. The sample holder is rotated horizontally along it length at 50 rpm for 1 minute. The tablets are weighed again and the amount of material loss expressed as percentage

$$\text{\% friability index} = \frac{W_0 - W_1}{W_0} \times 100$$

where:

$W_0$ = initial weight

$W_1$ = weight of the tablets after one minute of test at 50 rpm

Sodium citrate was used of the following granulometry

| PRODUCT | 1000 μ | 850 μ | 600 μ | 425 μ | 212 μ | 125 μ | 63 μ | <63 μ |
|---------|--------|-------|-------|-------|-------|-------|------|-------|
| COARSE | 0,08 | 3,58 | 39,3 | 33,46 | 17,4 | 4,60 | 1,38 | 0,17 |
| COARSE1 | 0,51 | 1,67 | 20,71 | 32,56 | 33,24 | 8,70 | 2,29 | 0,29 |
| COARSE2 | 1,55 | 3,62 | 21,88 | 21,41 | 42,86 | 7,45 | 1,17 | 0,06 |
| FINE | 0 | 0,06 | 1,27 | 22,12 | 64,26 | 9,54 | 2,4 | 0,35 |

Below is an example of formula in which the use of the above citrate is used.

| Raw Materials | Region1 | Region2 |
|---------------|---------|---------|
| Polymer | 28 | 28 |
| Citrate | 57.8 | 54.69 |
| Binder/ Disintegrant | 14.2 | 15.29 |
| Silicate | | 2 |
| Dye | | 0.016 |
| TOTAL | 100 | 100 |

## Claims

1. A multi-region water-softening tablet, being a compressed composition comprising particles of citric acid or a salt thereof, in which greater than 45% of said particles have a size of at least 425 microns and wherein the distribution of citric acid or its salt is such that its weight excess in a first region is at least 5% greater than in a second region.

2. A water-softening tablet as claimed in claim 1, in which greater than 60% of said particles of citric acid or a salt thereof have a size of greater than 425 microns.

3. A water-softening tablet as claimed in claim 1, in which at least 95% of said particles of citric acid or a salt thereof have a size of at least 200 microns.

4. A water-softening tablet as claimed in claim 3, in which the percentage of particles of citric acid or a salt thereof as defined have a size of at least 300 microns.

5. A water-softening tablet as claimed in claim 4, in which the percentage of particles of citric acid or a salt thereof as defined have a size of at least 400 microns.

6. A water-softening tablet as claimed in any preceding claim in which an additional water-softening active is present, selected from an ion-exchange agent, an ion-capturing agent and an anti-nucleating agent.

## Patentansprüche

1. Mehrzonige Wasserenthärtungstablette, bei der es sich um eine komprimierte Zusammensetzung umfassend Partikel von Zitronensäure oder einem Salz davon handelt, wobei mehr als 45% dieser Partikel eine Größe von mindestens 425 Mikrometern aufweisen und wobei die Verteilung der Zitronensäure oder ihres Salzes derart ist, dass ihr Gewichtsüberschuss in einer ersten Zone denjenigen in einer zweiten Zone um mindestens 5% übersteigt.

2. Wasserenthärtungstablette nach Anspruch 1, in der mehr als 60% der Partikel von Zitronensäure oder einem Salz davon eine Größe von mehr als 425 Mikrometern aufweisen.

**3.** Wasserenthärtungstablette nach Anspruch 1, in der mindestens 95% der Partikel von Zitronensäure oder einem Salz davon eine Größe von mindestens 200 Mikrometern aufweisen.

**4.** Wasserenthärtungstablette nach Anspruch 3, in der der Prozentsatz an Partikeln von Zitronensäure oder einem Salz davon wie definiert eine Größe von mindestens 300 Mikrometern aufweist.

**5.** Wasserenthärtungstablette nach Anspruch 4, in der der Prozentsatz an Partikeln von Zitronensäure oder einem Salz davon wie definiert eine Größe von mindestens 400 Mikrometern aufweist.

**6.** Wasserenthärtungstablette nach einem der vorhergehenden Ansprüche, in der ein zusätzlicher wasserenthärtender Wirkstoff aus der Reihe Ionenaustauscher, Ionenfänger und Mittel gegen Kesselstein vorliegt.


**Revendications**

**1.** Comprimé adoucisseur d'eau à plusieurs régions, qui est une composition comprimée comprenant des particules d'acide citrique ou d'un de ses sels, dans lequel plus de 45% desdites particules ont une taille d'au moins 425 microns et dans lequel la distribution de l'acide citrique ou de son sel est telle que son excès de poids dans une première région soit d'au moins 5% de plus que dans une deuxième région.

**2.** Comprimé adoucisseur d'eau selon la revendication 1, dans lequel plus de 60% desdites particules d'acide citrique ou d'un de ses sels ont une taille de plus de 425 microns.

**3.** Comprimé adoucisseur d'eau selon la revendication 1, dans lequel au moins 95% desdites particules d'acide citrique ou d'un de ses sels ont une taille d'au moins 200 microns.

**4.** Comprimé adoucisseur d'eau selon la revendication 3, dans lequel le pourcentage de particules d'acide citrique ou d'un de ses sels, comme défini, ont une taille d'au moins 300 microns.

**5.** Comprimé adoucisseur d'eau selon la revendication 4, dans lequel le pourcentage de particules d'acide citrique ou d'un de ses sels, comme défini, ont une taille d'au moins 400 microns.

**6.** Comprimé adoucisseur d'eau selon l'une quelconque des revendications précédentes dans lequel un agent actif adoucisseur d'eau supplémentaire est présent, choisi parmi un agent échangeur d'ions, un agent capturant les ions et un agent anti-nucléation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 992238 A
- GB 20869564 A
- EP 892040 A
- WO 9902640 A
- GB 1429143 A

- EP 384070 A
- US 4464839 A
- US 4820439 A
- EP 551375 A

**Non-patent literature cited in the description**

- *Glastechn. Ber.,* 1964, vol. 37, 194-200
- *Zeitschrift für Kristallogr.,* 1969, vol. 129, 396-404

- *Bull. Soc. Franc. Min. Crist.,* 1972, vol. 95, 371-382
- *Amer. Mineral,* 1977, vol. 62, 763-771